# EUROPEAN PATENT SPECIFICATION

(11) **EP 4 024 950 B1**
(45) Date of publication and mention of the grant of the patent: **25.02.2026**
(21) Application number: 19945286.3
(22) Date of filing: 11.09.2019
(51) Int. Cl.: H04W 72/21, H04W 76/27

(54) **FAST RRC RESUME PROCEDURE**
SCHNELLES RRC-RESUME-VERFAHREN
PROCÉDURE DE RÉSUMÉ RAPIDE RRC

(43) Date of publication of application: 06.07.2022
(73) Proprietor: HUAWEI TECHNOLOGIES CO., LTD., Shenzhen, Guangdong 518129 (CN)
(72) Inventor: YAO, Qinbo, Shenzhen, Guangdong 518129 (CN); WANG, Xiaofeng, Shenzhen, Guangdong 518129 (CN); HAN, Xu, Shenzhen, Guangdong 518129 (CN)
(74) Representative: Gill Jennings & Every LLP
(86) International application number: PCT/CN2019/105386
(87) International publication number: WO 2021/046758

(56) References cited:
- WO-A1-2018/201898
- CN-A- 103 428 786
- CN-A- 107 006 056
- US-A1- 2008 069 053
- US-A1- 2019 215 887
- ANONYMOUS: "3rd Generation Partnership Project; Technical Specification Group Radio Access Network; NR; Radio Link Control (RLC) protocol specification (Release 15)", 3GPP STANDARD; TECHNICAL SPECIFICATION; 3GPP TS 38.322, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.5.0, 9 April 2019 (2019-04-09), pages 1 - 33, XP051723352
- HUAWEI ET AL: "Single uplink feedback for dual downlink data transmission", vol. RAN WG2, no. Prague, Czech Republic; 20190826 - 20190830, 16 August 2019 (2019-08-16), XP051768360, Retrieved from the Internet <URL:http://www.3gpp.org/ftp/tsg_ran/WG2_RL2/TSGR2_107/Docs/R2-1910584.zip> [retrieved on 20190816]
- "Connection control TP", vol. RAN WG2, no. Busan, Korea; 20180521 - 20180525, 25 May 2018 (2018-05-25), XP051520312, Retrieved from the Internet <URL:http://www.3gpp.org/ftp/tsg%5Fran/WG2%5FRL2/TSGR2%5F102/Docs/R2%2D1808961%2Ezip> [retrieved on 20180525]
- ANONYMOUS: "3rd Generation Partnership Project; Technical Specification Group Radio Access Network; NR; Radio Resource Control (RRC) protocol specification (Release 15)", 3GPP STANDARD; TECHNICAL SPECIFICATION; 3GPP TS 38.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.6.0, 29 June 2019 (2019-06-29), pages 1 - 519, XP051754472
- "Connection control TP", 3GPP DRAFT; R2-1808961 - TP ON NR RRC CONNECTION CONTROL BASED ON DRAFT TS38331 V15.1.0_V0-RAN2-101BIS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Busan, Korea; 20180521 - 20180525, 25 May 2018 (2018-05-25), Mobile Competence Centre ; 650, route des Lucioles ; F-06921 Sophia-Antipolis Cedex ; France, XP051520312

## Description

### TECHNICAL FIELD

This application relates to the field of mobile communication technologies, and in particular, to a wireless communication method and apparatus, and a system.

### BACKGROUND

In the field of fifth generation mobile communication (the 5th generation mobile communication, 5G) technologies, for a radio resource control (radio resource control, RRC) layer, user equipment (user equipment, UE) has three different new radio (new radio, NR) RRC states: an RRC idle state, an RRC connected state, and an RRC inactive state.

When the UE enters the RRC connected state from the RRC inactive state, the UE can send uplink messages only after obtaining uplink shared channel resources. In a conventional technology, the UE may obtain an uplink shared channel resource of a wireless network device by additionally initiating random access to the wireless network device, to send a radio link control (radio link control, RLC) status report (status report). However, a waiting delay in a random access procedure is long, and this wastes power consumption of the UE. In addition, when a function of the wireless network device is incomplete, the random access initiated by the UE and additionally received by the wireless network device may cause the wireless network device to be in an abnormal state. Consequently, the UE cannot complete connection resumption.

US2019215887A1 relates to NR RRC connection setup optimization.

Publication titled, "3rd Generation Partnership Project; Technical Specification Group Radio Access Network; NR; Radio Link Control (RLC) protocol specification (Release 15)", 3GPP STANDARD; TECHNICAL SPECIFICATION; 3GPP TS 38.322, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20190409), vol. RAN WG2, no. V15.5.0, pages 1 - 33, provides RLC protocol specification.

HUAWEI ET AL, "Single uplink feedback for dual downlink data transmission", vol. RAN WG2, no. Prague, Czech Republic; 20190826 - 20190830, (20190816), 3GPP DRAFT; R2-1910584 SINGLE UPLINK FEEDBACK FOR DUAL DOWNLINK DATA TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPO, URL: http://www.3gpp.org/ftp/tsg_ran/WG2_RL2/TSGR2_107/Docs/R2-1910584.zip, (20190816), relates to single uplink feedback for dual downlink data transmission.

"Connection control TP", vol. RAN WG2, no. Busan, Korea; 20180521 - 20180525, (20180525), 3GPP DRAFT; R2-1808961 - TP ON NR RRC CONNECTION CONTROL BASED ON DRAFT TS38331 V15.1.0_V0-RAN2-101BIS, 3RD GENERATION PARTNERSHIP PROJECT (3GPP), MOBILE COMPETENCE CENTRE ; 650, ROUTE DES LUCIOLES; URL: http://www.3gpp.org/ftp/tsg%5Fran/WG2%5FRL2/TSGR2%5F102/Docs/R2%2D1808961%2Ezip, (20180525), relates to connection control TP.

Publication titled, "3rd Generation Partnership Project; Technical Specification Group Radio Access Network; NR; Radio Resource Control (RRC) protocol specification (Release 15)", 3GPP STANDARD; TECHNICAL SPECIFICATION; 3GPP TS 38.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20190629), vol. RAN WG2, no. V15.6.0, pages 1 - 519, provides RRC protocol specification.

### SUMMARY

In view of this, implementations of this application provide a wireless communication method and apparatus, and products, to avoid initiating unnecessary random access by UE in a connection resume procedure. In this way, a delay is reduced to quickly resume a connection of the UE.

The invention has been defined in the independent claims. Further specific technical features have been defined in the dependent claims.

### BRIEF DESCRIPTION OF DRAWINGS

FIG. 1 is a diagram of a system architecture of a communication system according to an implementation of this application;
FIG. 2 is a schematic diagram of layers of a radio resource control plane according to an implementation of this application;
FIG. 3 is a schematic flowchart of NR RRC state transition according to an implementation of this application;
FIG. 4 is a schematic flowchart of connection resumption of a terminal in the conventional technology;
FIG. 5 is a diagram of signaling interaction of initiating random access in the conventional technology;
FIG. 6 is a schematic flowchart of a wireless communication method according to an implementation of this application;
FIG. 7 is a schematic flowchart of another wireless communication method according to an implementation of this application;
FIG. 8 is a diagram of a code example of an RRC resume message according to an implementation of this application;
FIG. 9 is a schematic flowchart of another wireless communication method according to an implementation of this application;
FIG. 10 is a schematic diagram of a structure of a wireless communication apparatus according to an implementation of this application; and
FIG. 11 is a schematic diagram of a structure of another wireless communication apparatus according to an implementation of this application.

### DESCRIPTION OF IMPLEMENTATIONS

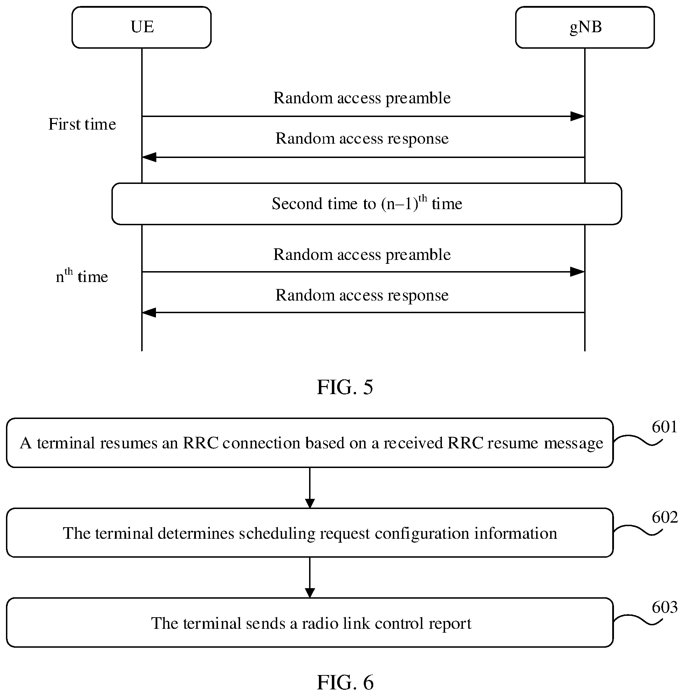

To make the objectives, technical solutions, and advantages of this invention clearer, the following further describes various implementations in detail with reference to the accompanying drawings. The implementations described below, except for the embodiment related to figure 6, are not claimed, they are included to help understanding the context of the invention. Any implementation which does not fall within the scope of the claims does not form part of the invention, but rather included as an illustrative example that is useful for understanding the invention.

The technical solutions in implementations of this application are described below with reference to the accompanying drawings in implementations of this application. In descriptions of this application, unless otherwise specified, "/" indicates a meaning of or. For example, A/B may indicate A or B. "And/or" in the specification describes only an association relationship between associated objects, and indicates that three relationships may exist. For example, A and/or B may indicate the following three cases: A exists alone, both A and B exist, and B exists alone. In addition, in the descriptions of this application, "a plurality of" means two or more than two, unless otherwise specified. In addition, to clearly describe the technical solutions in implementations of this application, terms such as "first" and "second" are used in implementations of this application to distinguish between same items or similar items that have basically same functions and purposes. A person skilled in the art may understand that the terms such as "first" and "second" do not limit a quantity or an execution sequence, and the terms such as "first" and "second" do not indicate a definite difference.

In addition, the terms "include/comprise" and "have" in the implementations, claims, and accompanying drawings of this application are not exclusive. For example, a process, a method, a system, a product, or a device including a series of steps or modules is not limited to the listed steps or modules, and may further include steps or modules that are not listed.

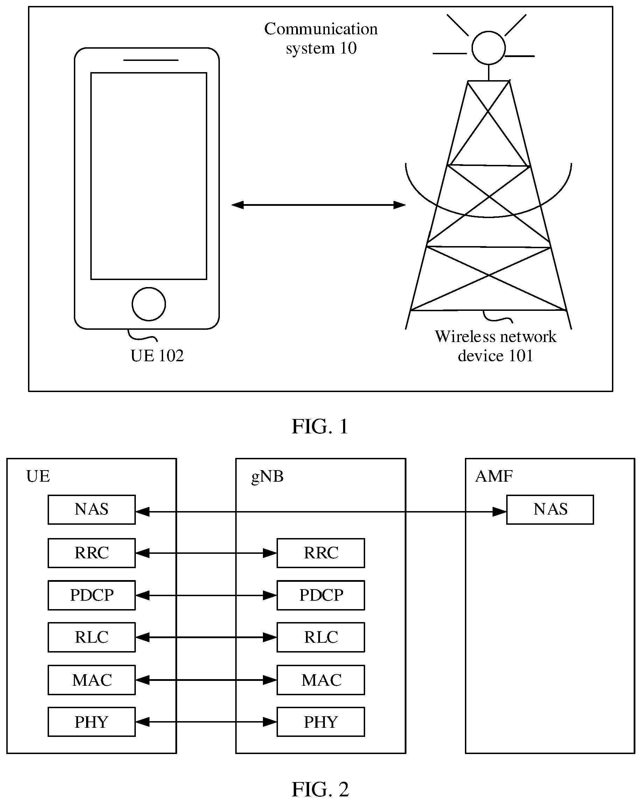

FIG. 1 is a diagram of a system architecture of a communication system according to an implementation of this application. The communication system is a 5G system, also referred to as an NR system. As shown in FIG. 1, the communication system 10 includes a wireless network device 101 and UE 102. The wireless network device 101 and the UE 102 establish a wireless connection through an NR air interface. It should be understood that only one wireless network device and one piece of UE are shown in FIG. 1, but the communication system 10 may include a plurality of wireless network devices, or may include a plurality of pieces of UE.

Herein, the wireless network device 101 includes but is not limited to a next generation base station (next generation Node B, gNB or gNodeB) in 5G.

The UE includes but is not limited to a mobile terminal, a tablet, a computer having wireless receiving and transmitting functions, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), and the like.

FIG. 2 is a schematic diagram of a layer structure of a new radio protocol stack according to an implementation of this application. As shown in FIG. 2. layers of the NR protocol stack user plane include: a non-access stratum (non-access stratum, NAS), an RRC layer, a packet data convergence protocol (packet data convergence protocol, PDCP) layer, a radio link control (radio link control, RLC) layer, a medium access control (medium access control, MAC) layer, and a physical (physical, PHY) layer.

The PHY layer belongs to a first layer (L1) of NR. The PDCP layer, the RLC layer, and the MAC layer belong to a second layer (L2) of NR, also referred to as a data link layer. The RRC layer belongs to a third layer (L3) of NR, also referred to as a network layer.

As shown in FIG. 2, all protocol stacks of UE are located in the UE. On a network side, an RRC layer, a PDCP layer, an RLC layer, a MAC layer, and a PHY layer are deployed on a gNB. A NAS is located in a mobility management (access and mobility management function. AMF) entity of a core network.

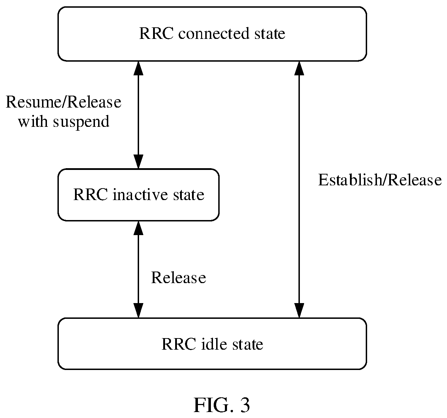

FIG. 3 is a schematic flowchart of NR RRC state transition according to an implementation of this application. As shown in FIG. 3, UE has three different RRC states in NR: an RRC idle state, an RRC connected state, and an RRC inactive state. It may be understood that the foregoing three RRC states may be mutually transited under different conditions.

Specifically, for example, after searching for a cell, the UE camps on a suitable cell and enters the RRC idle state. In scenarios such as registration or service triggering, the UE in the RRC idle state may establish (establish) an RRC link and then enter the RRC connected state.

Further, the UE in the RRC connected state may release (release) the RRC link and restore to the RRC idle state. When temporarily having no service, the UE in the RRC connected state may suspend the RRC connection and enter the RRC inactive state, to reduce power consumption. The UE in the RRC inactive state may also resume (resume) the RRC link and enter the RRC connected state. Similarly, the UE in the RRC inactive state may alternatively release the RRC link and enter the RRC idle state. The UE in the RRC inactive state may alternatively perform connection resumption and try to enter the RRC connected state when a service is triggered or a radio access network (radio access network, RAN)-based notification area update (RAN-based notification area update, RNAU) needs to be performed.

After the terminal in the inactive state receives an RRC resume *(RRCResume)* message, because the RRC resume message is an acknowledged mode (acknowledged mode, AM) message, according to a 3GPP technical specification (for example, 3GPP TS38.322 V15.5.0), an RLC layer of the terminal needs to send an RLC status report to an RLC layer of a wireless network device. The RLC status report is used to provide a positive acknowledgement (positive acknowledgements) and/or a negative acknowledgement (negative acknowledgements) to a gNB. The RLC status report is uplink data (uplink data), and is carried on a PUSCH. Therefore, the terminal needs to first obtain an uplink shared channel resource, to send the RLC status report. In the conventional technology, in response to the received RRC resume message, the terminal may obtain the uplink shared channel resource by additionally initiating a random access procedure, to send the RLC status report. However, a priority of the random access procedure is high. This may hinder the terminal from sending uplink data and receiving downlink data. In addition, duration of the random access procedure is long. If the terminal initiates the random access procedure before completing the RRC connection resumption and sending an RRC resume complete message, the terminal may send the RRC resume message only after the random access procedure end, the uplink shared channel resource is obtained, and the RLC status report by using the uplink shared channel resource is sent. Therefore, a waiting delay of the terminal is long. In addition, when a function of the wireless network device is incomplete, the random access initiated by the UE and additionally received by the wireless network device may cause the wireless network device to be in an abnormal state. Consequently, the UE cannot complete connection resumption.

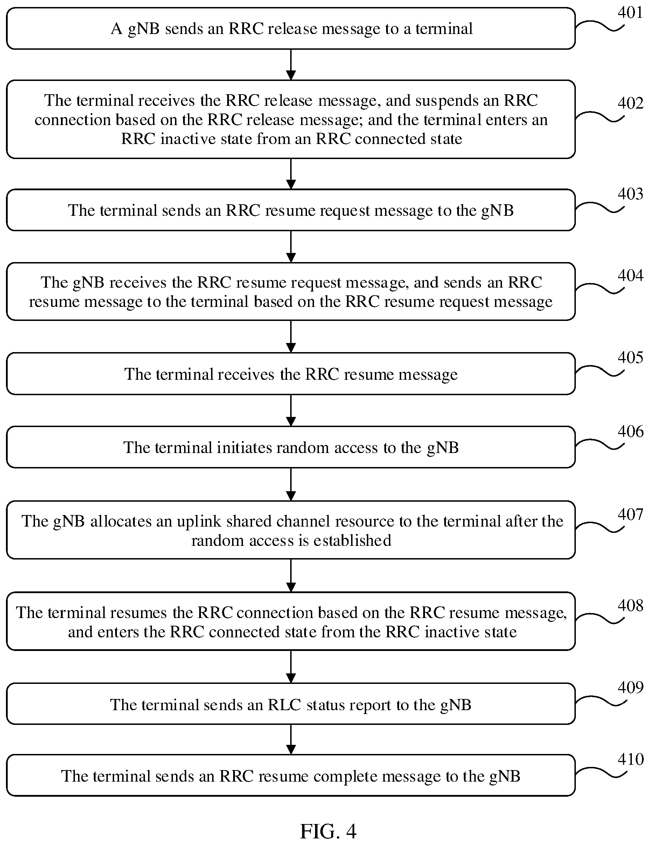

FIG. 4 is a schematic flowchart of connection resumption of a terminal in the conventional technology. As shown in FIG. 4, signaling interaction between a terminal and a gNB is used as an example to describe a connection resume procedure of the terminal.

401: The gNB sends an RRC release *(RRCRelease)* message to the terminal.

402: The terminal receives the RRC release message, and suspends (suspend) an RRC connection based on the RRC release message. In this case, the terminal enters an RRC inactive state from an RRC connected state.

403: The terminal sends an RRC resume request (*RRCResumeRequest*) message to the gNB.

404: The gNB receives the RRC resume request message, and sends an RRC resume *(RRCResume)* message to the terminal based on the RRC resume request message.

405: The terminal receives the RRC resume message.

An uplink shared channel resource needs to be first obtained, to send an RLC status report.

406: The terminal initiates random access to the gNB.

The uplink shared channel resource may be obtained by initiating a random access procedure. For the random access procedure between the terminal and the gNB, refer to FIG. 5. *n* ≥ 2. As shown in FIG. 5, the terminal sends a random access preamble (RA preamble) to the gNB, and the gNB feeds back a random access response (RA response) message to the terminal. The terminal sends the random access preamble to the gNB again, and the gNB feeds back the response message to the terminal again. This is repeated at least twice, to establish random access between the terminal and the gNB.

However, it takes a long time to send the random access preamble and receive the random access response message each time, and the random access procedure causes an excessively long delay.

407: The gNB allocates the uplink shared channel resource to the terminal after the random access is established.

408: The terminal resumes the RRC connection based on the RRC resume message, where the resuming the RRC connection includes: entering the RRC connected state from the RRC inactive state.

409: The terminal sends the RLC status report to the gNB.

Specifically, the terminal sends the RLC status report to the gNB by using the uplink shared channel resource.

410: The terminal sends an RRC resume complete message to the gNB.

The RRC resume complete message is used to confirm successful completion of the RRC connection resumption. After receiving the RRC resume complete message, the gNB may confirm successful completion of the RRC connection resumption.

In a specific implementation process, in a possible implementation, the terminal sends the RRC resume complete (*RRCResumeComplete*) message to the gNB by using the uplink shared channel resource.

In another possible implementation, the terminal needs to obtain a new uplink shared channel resource, to send the RLC status report to the gNB.

It can be learned from the foregoing description that the terminal additionally initiates random access to the wireless network device in a process of connection resumption of the terminal based on the conventional technology. This increases power consumption of the terminal, causes a long waiting delay, and affects terminal performance.

It should be noted that, in a process of implementing the connection resumption of the terminal, when the terminal enters the RRC inactive state from the RRC connected state, the wireless network device indicates a RAN area, a RAN paging cycle, and the like. When the terminal is in the RRC inactive state, the terminal usually tries to enter the RRC connected state from the RRC inactive state in four scenarios. Scenario 1 is receiving RAN paging from a network. Scenario 2 is triggering an uplink service or NAS signaling procedure. Scenario 3 is before a RAN-based notification area update (RAN-based notification area update, RNAU) needs to be performed after the terminal moves. Scenario 4 is after a preset timer (for example, T380) expires if the uplink service is not triggered.

Therefore, implementations of this application disclose a wireless communication method and apparatus, and a system. For a UE connection resume scenario, after an RRC resume *(RRCResume)* message delivered by a wireless network device is received, whether scheduling request configuration information exists is first determined, and then subsequent operations are performed. Therefore, this avoids initiating unnecessary random access by UE, and reduces power consumption and a waiting delay of the UE, to quickly resume a connection of the UE.

It should be noted that the wireless connection resume method in this application is performed by an apparatus on a terminal side. The apparatus may be a terminal, or may be a wireless communication apparatus (for example, a baseband processor) in the terminal. In other words, the terminal or the wireless communication apparatus in the terminal may perform the wireless communication method in this application.

The following implementations of this application describes in detail a specific implementation process.

FIG. 6 is a schematic flowchart of a wireless communication method according to an implementation of this application. The method is performed by a terminal or a chip inside the terminal. As shown in FIG. 6, the method includes the following steps.

601: The terminal receives an RRC resume message.

602: The terminal determines scheduling request configuration information in response to the RRC resume message, where the scheduling request configuration information is used to obtain an uplink shared channel resource.

The scheduling request configuration information is directly determined based on the RRC resume message.

In in optional implementation not claimed, an RRC connection is resumed in response to the RRC resume message. The resuming an RRC connection includes: restoring a master cell group (*mastercellgroup*) from a stored user equipment inactive access stratum (access stratum, AS) context (UE Inactive AS context). The resuming an RRC connection is restoring the master cell group from the stored user equipment inactive access stratum context. In this case, the scheduling request configuration information is determined based on the master cell group.

The scheduling request configuration (scheduling request config) information is used to obtain the uplink shared channel resource. The scheduling request configuration information includes a scheduling request identifier and a scheduling request resource identifier. The scheduling request configuration information includes a scheduling request identifier (*SchedulingRequestID*) and a scheduling request resource identifier (*SchedulingRequestResourceID*). A scheduling request signal (signalling of Scheduling Request) is sent based on the scheduling request configuration information. The scheduling request signal is carried on a physical uplink control channel (physical uplink control channel, PUCCH) and is used to request a PUSCH resource.

It should be understood that, in a specific implementation process, in an optional implementation not claimed, the master cell group restored from the stored user equipment inactive access stratum context includes a scheduling request configuration (*SchedulingRequestConfig*) information element (information element, IE), a logical channel configuration (*LogicalChannelConfig*) information element, and a scheduling request resource configuration (*SchedulingRequestResourceConfig*) information element. The foregoing three information elements each carry a scheduling request identifier, and the scheduling request resource configuration information element further carries a scheduling request resource identifier. In another optional implementation, the RRC resume message includes a scheduling request configuration information element, a logical channel configuration information element, and a scheduling request resource configuration information element. The foregoing three information elements each carry a scheduling request identifier, and the scheduling request resource configuration information element further carries a scheduling request resource identifier.

Optionally, in a specific implementation process, only when the scheduling request identifiers determined from the foregoing three information elements (the scheduling request configuration information element, the logical channel configuration information element, and the scheduling request resource configuration information element) are consistent, the scheduling request identifiers and the scheduling request resource identifier determined from the three information elements may be used to send the scheduling request signal, to request the uplink shared channel resource. If the scheduling request identifiers are inconsistent, the uplink shared channel resource may be obtained by initiating a random access procedure.

603: The terminal sends an RLC status report.

Specifically, the terminal sends the RLC status report by using the uplink shared channel resource. The RLC status report is used to provide a positive acknowledgement of an RLC service data unit (service data unit, SDU). The RLC status report is uplink data, and is carried on a PUSCH.

Optionally, the method further includes 604: The terminal sends an RRC resume complete message.

Specifically, the terminal sends the RRC resume complete message by using the uplink shared channel resource. The terminal sends the RRC resume complete *(RRCResumeComplete)* message by using the uplink shared channel resource, where the RRC resume complete message is used to confirm successful completion of the RRC connection resumption. After receiving the RRC resume complete message, a wireless network device determines that the RRC connection resume procedure is successfully completed.

In implementations of this application, for a connection resume scenario, after receiving the RRC resume message from the wireless network device, the terminal resumes the RRC connection, determines the scheduling request configuration information, and obtains the uplink shared channel resource based on the scheduling request configuration information. In this case, the RLC status report is sent by using the uplink shared channel resource, and the RRC resume complete message is sent, to complete connection resumption of the terminal. Therefore, this avoids initiating unnecessary random access by the terminal in the connection resume procedure, reduces a waiting delay of the terminal, reduces power consumption of the terminal, and improves terminal performance, to quickly resume a connection of the terminal.

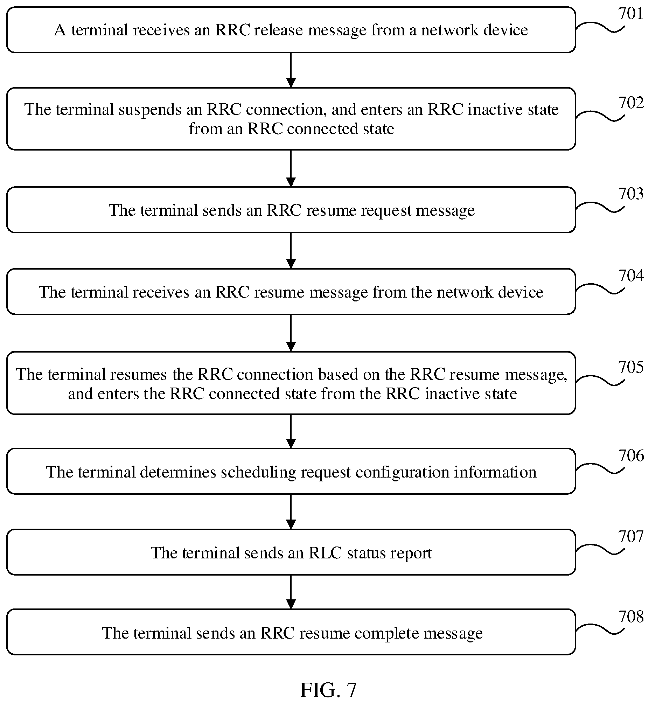

FIG. 7 is a schematic flowchart of another wireless communication method according to an implementation of this application. The method may be performed by a terminal or a chip inside the terminal. As shown in FIG. 7, the method includes the following steps.

Optionally, 701: The terminal receives an RRC release message from a wireless network device, where the RRC release message includes a suspend configuration field and is used to indicate to suspend an RRC connection.

In 701, a terminal in an RRC connected state receives the RRC release message. If the RRC release (*RRCRelease*) message includes the suspend configuration (*suspendconfig*) field (field), the RRC release message is used to indicate the terminal to suspend the RRC connection.

The suspend configuration field may be carried by an RRC release information element (information element, IE) in the RRC release message. The wireless network device may be a wireless network device corresponding to a gNB.

Optionally, 702: The terminal suspends the RRC connection, and enters an RRC inactive state from the RRC connected state.

In 702, that the terminal suspends the RRC connection based on the RRC release message specifically includes the following operations:
applying the received suspend configuration: if a default (default) MAC cell group configuration exists, releasing the MAC cell group configuration and reconfiguring a MAC layer; and suspending radio bearers.

The suspended radio bearers include a signaling radio bearer (signaling radio bearer, SRB) other than an SRB 0 and a data radio bearer (data radio bearer, DRB), for example, an SRB 1. A user equipment inactive access stratum context is stored.

The terminal enters the RRC inactive state from the RRC connected state.

It may be understood that receiving the RRC release message also indicates a packet data convergence protocol (packet data convergence protocol, PDCP) to be suspended at a lower layer of all DRBs.

Optionally, 703: The terminal sends an RRC resume request message, where the RRC resume request message is used to request to resume the RRC connection.

In 703, the terminal sends the RRC resume request (*RRCResumeRequest*) message to the wireless network device. An RRC resume request message sent by the UE to the wireless network device varies according to a cell in which the UE is located. The RRC resume request message may be specifically an *RRCResumeRequest* message or an *RRCResumeRequest1* message.

Optionally, 704: The terminal receives an RRC resume message from the wireless network device, where the RRC resume message does not include a full configuration field and is used to resume the RRC connection.

In 704, in response to the RRC resume request message sent by the terminal, the wireless network device may send the RRC resume *(RRCResume)* message to the terminal, so that the terminal resumes the RRC connection.

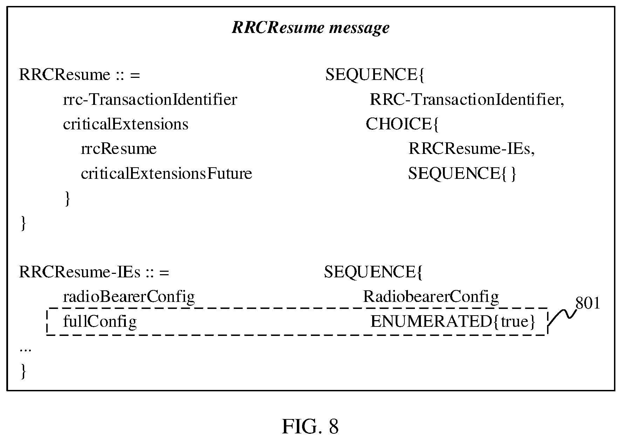

It should be noted that the RRC resume message includes the full configuration (*fullconfig*) field, indicating that the RRC resumption is full configuration. Otherwise, the RRC resume message does not include the full configuration field, indicating that the RRC resumption is delta configuration. The full configuration may be understood as: releasing or clearing current radio configurations except for a master cell group-radio network temporary identifier (MCG-RNTI) and AS security configurations associated with a master key, and reconfiguring radio configuration related parameters. The delta configuration may be understood as updating only a parameter configuration carried in the message. To further describe the field, the following provides a schematic diagram of code of an RRC resume message. FIG. 8 is a diagram of a code example of an RRC resume message according to an implementation of this application. As shown in FIG. 8, existence of 801 indicates that the RRC resume message carries a full configuration field, and the full configuration field is carried by an RRC resume information element in the RRC resume message. The RRC resume message carries the field and the field is configured as true (true), indicating full configuration. The RRC resume message does not carry the field or the field is configured as false (false), indicating delta configuration.

705: The terminal resumes the RRC connection based on the received RRC resume message, where the resuming the RRC connection includes: entering the RRC connected state from the RRC inactive state.

In 705, specifically, resuming the RRC connection may specifically include the following operations: restoring a master cell group (*mastercellgroup*) and a PDCP configuration (*pdcp-config*) from a user equipment inactive AS context previously stored by the terminal, and resuming the suspended radio bearers.

706: The terminal determines scheduling request configuration information.

In 706, in an optional implementation not claimed, the terminal may further determine the scheduling request configuration information based on the master cell group. The terminal may use

According to the claimed invention, the terminal directly determines the scheduling request configuration information based on the RRC resume message. If a wireless network device that indicates the terminal to suspend the RRC is different from a wireless network device that indicates the terminal to resume the RRC, the information in the user equipment inactive AS context previously stored by the terminal may no longer be applicable, and the scheduling request configuration information may be directly determined based on the RRC resume message.

The scheduling request configuration information includes a scheduling request identifier (*SchedulingRequestID*) and a scheduling request resource identifier (*SchedulingRequestResourceID*)*.* A scheduling request signal is sent based on the scheduling request configuration information. The scheduling request signal is carried on a PUCCH and is used to request a PUSCH resource.

It should be understood that, in a specific implementation process, in an optional implementation, the RRC resume message includes a scheduling request configuration information element, a logical channel configuration information element, and a scheduling request resource configuration information element. The foregoing three information elements each carry a scheduling request identifier, and the scheduling request resource configuration information element further carries a scheduling request resource identifier. Only when the scheduling request identifiers determined from the foregoing three information elements are consistent, the scheduling request identifiers and the scheduling request resource identifier determined from the three information elements may be used to send the scheduling request signal, to request an uplink shared channel resource.

707: The terminal sends an RLC status report to the wireless network device.

The terminal sends the RLC status report to the wireless network device by using the uplink shared channel resource. The RLC status report is used to provide an acknowledgement of an RLC service data unit (service data unit, SDU). The RLC status report is uplink data, and is carried on a PUSCH.

708: The terminal sends an RRC resume complete message to the wireless network device.

The terminal sends the RRC resume complete message to the wireless network device by using the uplink shared channel resource. In 708, specifically, the terminal sends the RRC resume complete message by using the obtained uplink shared channel resource.

In implementations of this application, for a connection resume scenario, after receiving the RRC resume message from the wireless network device, the terminal determines whether the scheduling request configuration information currently exists, and obtains the uplink shared channel resource based on the scheduling request configuration information when determining that the scheduling request configuration information exists, to send the RLC status report and the RRC resume complete message. In this way, connection resumption of the terminal is completed. Therefore, this avoids initiating unnecessary random access by the terminal in the connection resume procedure, reduces power consumption of the terminal, and improves terminal performance, to quickly resume a connection of the terminal.

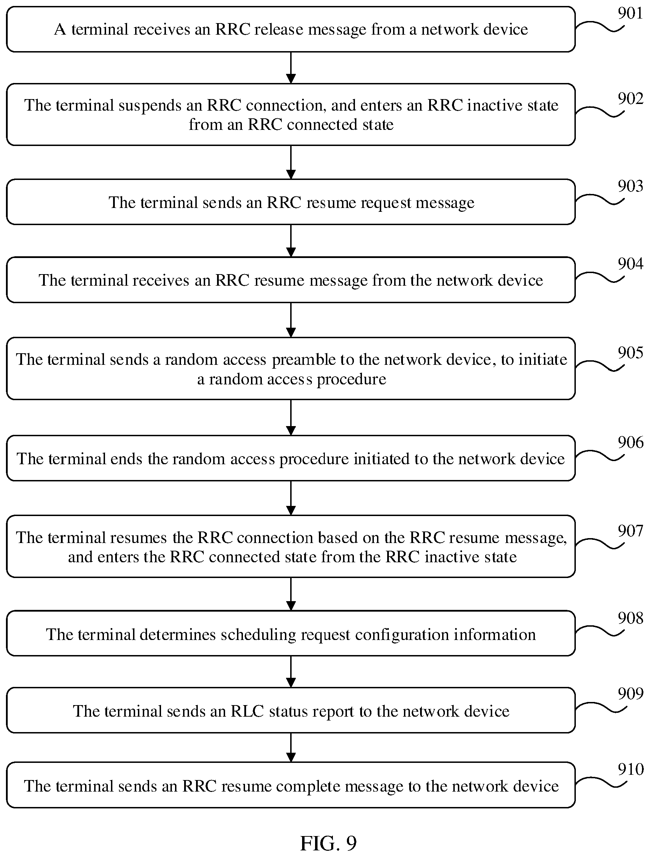

FIG. 9 is a schematic flowchart of another wireless communication method according to an implementation of this application. The method may be performed by a terminal or a chip inside the terminal. As shown in FIG. 9, the method includes the following steps.

Optionally, 901: The terminal receives an RRC release message from a wireless network device, where the RRC release message includes a suspend configuration field and is used to indicate to suspend an RRC connection.

Optionally, 902: The terminal suspends the RRC connection, and enters an RRC inactive state from the RRC connected state.

Optionally, 903: The terminal sends an RRC resume request message, where the RRC resume request message is used to request to resume the RRC connection.

Optionally, 904: The terminal receives an RRC resume message from the wireless network device, where the RRC resume message does not include a full configuration field and is used to resume the RRC connection.

Optionally, 905: The terminal sends a random access preamble (*RA preamble*) to the wireless network device, to initiate a random access procedure.

In 905, the terminal sends the random access preamble to the wireless network device on a specific resource element (resource element, RE), to initiate the random access procedure. For a specific process, refer to FIG. 5. The terminal sends the random access preamble to the wireless network device on the specific RE, and the wireless network device feeds back a response message to the terminal. The terminal sends the random access preamble to the wireless network device again, and the wireless network device feeds back the response message to the terminal again. This is repeated until random access is established between the terminal and the wireless network device or is ended.

906: The terminal ends the random access procedure initiated to the wireless network device.

In 906, the previously initiated random access procedure may be ended in advance, to reduce a delay caused by a random access procedure. Optionally, in a process in which the terminal establishes random access to the wireless network device, after receiving a random access response sent by the wireless network device, the terminal may discard the random access response, and stop sending the random access preamble to the wireless network device, to end initiating the random access procedure to the wireless network device.

Optionally, in a process in which the terminal establishes random access to the wireless network device, the terminal may directly stop sending the random access preamble to the wireless network device, to end initiating the random access procedure to the wireless network device.

907: The terminal resumes the RRC connection based on the RRC resume message, where the resuming the RRC connection includes: entering the RRC connected state from the RRC inactive state.

908: The terminal determines scheduling request configuration information.

909: The terminal sends an RLC status report to the wireless network device.

910: The terminal sends an RRC resume complete message to the wireless network device.

The RRC resume complete message is used to confirm successful completion of the RRC connection resumption.

It should be understood that, for details of 901 to 910 in this application, refer to related descriptions in FIG. 6 to FIG. 8. Details are not described herein again.

In implementations of this application, for a connection resume scenario, after receiving the RRC resume message from the wireless network device, before determining whether the scheduling request configuration information currently exists, the terminal may end the random access procedure if the random access procedure is initiated, and obtain an uplink shared channel resource based on the scheduling request configuration information when determining that the scheduling request configuration information exists, to send the RLC status report and the RRC resume complete message. In this way, the connection resumption of the terminal is completed. Therefore, this avoids initiating unnecessary random access by the terminal in the connection resume procedure, reduces a waiting delay of the terminal, reduces power consumption of the terminal, and improves terminal performance, to quickly resume a connection of the terminal.

According to the wireless communication method disclosed in the implementations of this application, implementations of this application further disclose several wireless communication apparatuses. The apparatus may be UE. Specifically, the following implementations are used for description.

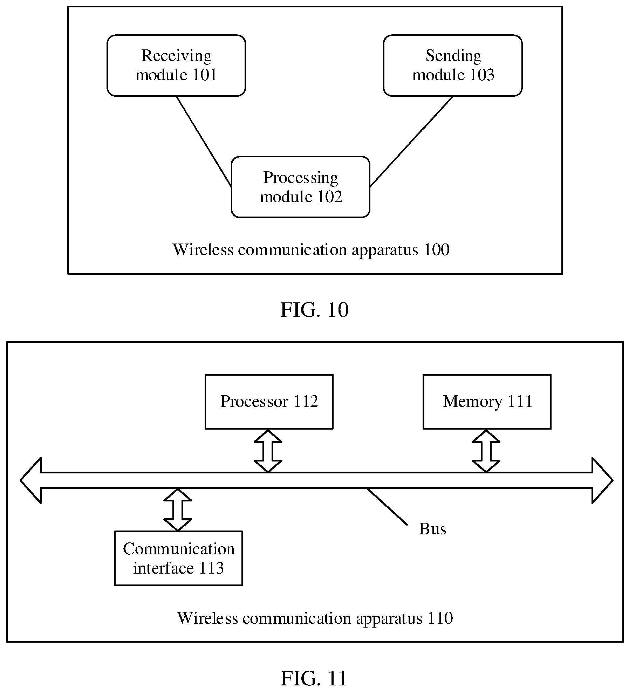

FIG. 10 is a schematic diagram of a structure of a wireless communication apparatus according to an implementation of this application. As shown in FIG. 10, the wireless communication apparatus 100 mainly includes a receiving module 101, a processing module 102, and a sending module 103.

The receiving module 101 is configured to receive an RRC resume message.

The processing module 102 is configured to determine scheduling request configuration information in response to the RRC resume message, where the scheduling request configuration information is used to obtain an uplink shared channel resource.

The sending module 103 is configured to send a radio link control status report by using the uplink shared channel resource, where the radio link control status report is used to provide an acknowledgement of a radio link control service data unit.

### During specific implementation:

Optionally, the sending module 103 is configured to send an RRC resume complete message by using the uplink shared channel resource, where the RRC resume complete message is used to confirm successful completion of RRC connection resumption.

Optionally, the receiving module 101 is configured to receive an RRC release message, where the RRC release message includes a suspend configuration field and is used to indicate to suspend an RRC connection.

Optionally, the processing module 102 is configured to: suspend the RRC connection, and enter an RRC inactive state from an RRC connected state.

Optionally, the sending module 103 is configured to send an RRC resume request message, where the RRC resume request message is used to request to resume the RRC connection.

Optionally, the receiving module 101 is configured to receive the RRC resume message, where the RRC resume message does not include a full configuration field and is used to resume the RRC connection.

Optionally, the processing module 102 is configured to: resume the RRC connection based on the RRC resume message, where the resuming the RRC connection includes entering the RRC connected state from the RRC inactive state; and determine the scheduling request configuration information based on the RRC resume message.

The scheduling request configuration information is used to obtain the uplink shared channel resource.

Optionally, the sending module 103 is configured to send the radio link control status report by using the uplink shared channel resource, where the radio link control status report is used to provide an acknowledgement of a radio link control service data unit.

Optionally, the sending module 103 is configured to send an RRC resume complete message by using the uplink shared channel resource, where the RRC resume complete message is used to confirm successful completion of the RRC connection resumption.

In implementations of this application, for a connection resume scenario, after receiving the RRC resume message from the wireless network device, the terminal determines the scheduling request configuration information currently exists, and may obtain the uplink shared channel resource based on the scheduling request configuration information, to send the RLC status report and the RRC resume complete message. In this way, connection resumption of the terminal is completed. Therefore, this avoids initiating unnecessary random access by the terminal in the connection resume procedure, reduces power consumption of the terminal, and improves terminal performance, to quickly resume a connection of the terminal.

When the RRC connection is suspended, in some possible implementations, the processing module 102 is specifically configured to: store a user equipment inactive access stratum context, and suspend radio bearers.

The radio bearers include a signaling radio bearer other than a signaling radio bearer 0 and a data radio bearer.

When the RRC connection is resumed, in some possible implementations, the processing module 102 is specifically configured to: restore a master cell group from a user equipment inactive access stratum context, and resume the radio bearers.

When the scheduling request configuration information is determined based on the RRC resume message, in some possible implementations, the processing module 102 is specifically configured to determine the scheduling request configuration information based on the master cell group.

In some possible implementations, the processing module 102 is further configured to: after determining the scheduling request configuration information based on the RRC resume message, send a scheduling request signal based on the scheduling request configuration information. The scheduling request signal is carried on a physical uplink control channel and is used to request an uplink shared channel resource.

Correspondingly, the sending module 103 is further configured to send an RRC resume complete message by using the uplink shared channel resource.

In some possible implementations, the sending module 103 is further configured to: after the receiving module 101 receives the RRC resume message, send a random access preamble, to initiate a random access procedure.

Correspondingly, the processing module 102 is further configured to end the random access procedure before determining the scheduling request configuration information based on the RRC resume message.

When the random access procedure is ended, in some possible implementations, the processing module 102 is specifically configured to: after the receiving module 101 receives a random access response message, discard the random access response message, and control the sending module 103 to stop sending the random access preamble.

When the random access procedure is ended, in some possible implementations, the processing module 102 is specifically configured to directly control the sending module 103 to stop sending the random access preamble.

With reference to the schematic diagram of a layer structure of a new radio protocol stack disclosed in FIG. 2 in the implementations of this application, functions of the receiving module, the sending module, and the processing module in the wireless communication apparatus disclosed in the implementations of this application may be implemented by using the RRC layer and the RLC layer deployed in the UE and shown in FIG. 2.

In addition, an implementation of this application further provides a communication system. The communication system includes a wireless network device, and the wireless communication apparatus disclosed in FIG. 10 in the foregoing implementations of this application.

With reference to the wireless communication method disclosed in the implementations of this application, the apparatus applicable to the wireless communication method and disclosed in the implementations of this application may be directly implemented by using hardware, a memory executed by a processor, or a combination thereof; or may be a processor, a controller, or a chip in a terminal.

FIG. 11 is a schematic diagram of a structure of another wireless communication apparatus according to an implementation of this application. As shown in FIG. 11, the wireless communication apparatus includes a memory 111, and a processor 112 and a communication interface 113 that communicate with the memory. The communication interface 113 may also be referred to as an interface circuit.

The processor 112 is coupled to the memory 111 through a bus. The processor 112 is coupled to the communication interface 113 through the bus.

The memory 111 may be specifically a content-addressable memory (content-addressable memory, CAM) or a random-access memory (random-access memory, RAM). The CAM may be a ternary content-addressable memory (ternary cam, TCAM).

The processor 112 may be specifically a central processing unit (central processing unit, CPU), a network processor (network processor, NP), an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), or a generic array logic (generic array logic, GAL).

The communication interface 113 may be a wired interface, for example, a fiber distributed data interface (fiber distributed data interface, FDDI) or an Ethernet (ethernet) interface.

Alternatively, the memory 111 may be integrated into the processor 112. If the memory 111 and the processor 112 are components independent of each other, the memory 111 is connected to the processor 112.

For example, the memory 111 may communicate with the processor 112 through the bus. The communication interface 113 may communicate with the processor 112 through the bus, or the communication interface 113 may be directly connected to the processor 112.

The memory 111 is configured to store wireless communication method program instructions.

Optionally, the memory 111 includes an operating system and an application program, configured to carry an operation program, code, or instructions of the wireless communication method disclosed in the implementations of this application.

When the processor 112 or the hardware device needs to perform a related operation of the wireless communication method disclosed in the implementations of this application, a process related to the connection resume method in the implementations of this application may be completed by invoking and executing the operation program, code, or instructions stored in the memory 111.

A specific process is as follows: The processor 112 invokes wireless communication method program code in the memory 111 to perform the methods shown in FIG. 6, FIG. 7, and FIG. 9. For example:
receiving an RRC release message, suspending an RRC connection, entering an RRC inactive state from an RRC connected state, sending an RRC resume request message, receiving an RRC resume message, resuming the RRC connection based on the RRC resume message, entering the RRC connected state from the RRC inactive state, determining scheduling request configuration information based on the RRC resume message, and sending an RRC resume complete message.

It may be understood that operations such as receiving/sending in the wireless communication method implementations shown in FIG. 6, FIG. 7, and FIG. 9 may refer to receiving/sending processing implemented by a processor, or may refer to a sending/receiving process completed by a receiver and a transmitter. The receiver and the transmitter may exist independently, or may be integrated into a transceiver.

All or some of the foregoing implementations may be implemented by using software, hardware, firmware, or any combination thereof. When the software is used to implement the implementations, all or some of the implementations may be implemented in a form of a computer program product. The computer program product includes one or more computer instructions. When the computer program instructions are loaded and executed on a computer, all or some of the procedures or the functions according to the implementations of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, an optical disc), a semiconductor medium (for example, a solid-state drive), or the like. In the foregoing implementations, the descriptions of the implementations are emphasized differently. For a part that is not detailed in an implementation, refer to related descriptions of other implementations.

An implementation of this application further provides a computer-readable storage medium. The computer-readable storage medium stores a computer program. The computer program is executed by related hardware, to complete and perform any wireless communication method provided in the implementations of this application.

In addition, an implementation of this application further provides user equipment. The user equipment includes any wireless communication apparatus disclosed in the implementations of this application. When the terminal runs, the terminal is enabled to perform any wireless communication method provided in the implementations of this application.

In the foregoing implementations, the descriptions of the implementations are emphasized differently. For a part that is not detailed in an implementation, refer to related descriptions of other implementations.

In conclusion, in implementations of this application, for a connection resume scenario, after determining scheduling request configuration information currently exists, a terminal may obtain an uplink shared channel resource based on the scheduling request configuration information, to send an RLC status report and an RRC resume complete message. In this way, connection resumption of the terminal is completed. Therefore, this avoids initiating unnecessary random access by the terminal in a connection resume procedure, reduces a waiting delay, reduces power consumption of the terminal, and improves terminal performance, to quickly resume a connection of the terminal.

The scope of protection is defined by the appended claims.

## Claims

1. A wireless communication method, wherein the method is performed by a user equipment and the method comprises:
receiving (601) a radio resource control, RRC, resume message;
determining (602) scheduling request configuration information in response to the RRC resume message, wherein the scheduling request configuration information is used to obtain an uplink shared channel resource; and
sending (603) a radio link control status report by using the uplink shared channel resource, wherein the radio link control status report is used to provide a positive acknowledgement of a radio link control service data unit;
wherein the determining scheduling request configuration information in response to the RRC resume message comprises:
determining the scheduling request configuration information based on the RRC resume message;
wherein the scheduling request configuration information comprises a scheduling request identifier and a scheduling request resource identifier.

2. The method according to claim 1, further comprising:
sending an RRC resume complete message by using the uplink shared channel resource, wherein the RRC resume complete message is used to confirm successful completion of the RRC connection resumption.

3. A user equipment, comprising:
a receiving module (101), a processing module (102), and a sending module (103), wherein
the receiving module is configured to receive a radio resource control RRC resume message;
the processing module is configured to determine scheduling request configuration information in response to the RRC resume message, wherein the scheduling request configuration information is used to obtain an uplink shared channel resource; and
the sending module is configured to send a radio link control status report by using the uplink shared channel resource, wherein the radio link control status report is used to provide a positive acknowledgement of a radio link control service data unit;
wherein that the processing module is configured to determine scheduling request configuration information in response to the RRC resume message specifically comprises:
the processing module is configured to determine the scheduling request configuration information based on the RRC resume message
wherein the scheduling request configuration information comprises a scheduling request identifier and a scheduling request resource identifier.

4. The user equipment according to claim 3, wherein the sending unit is further configured to send an RRC resume complete message by using the uplink shared channel resource, wherein the RRC resume complete message is used to confirm successful completion of the RRC connection resumption.

5. A computer-readable storage medium, wherein the computer-readable storage medium stores computer-executable instructions, and when the computer-executable instructions are invoked by a user equipment, the user equipment is enabled to perform the method according to any one of claims 1 or 2.

6. A computer program product, wherein the computer program product comprises computer instructions, and when the computer program product runs on a user equipment, the user equipment is enabled to perform the method according to any one of claims 1 or 2.

7. A communication system, wherein the communication system comprises a wireless network device and a user equipment according to any one of claims 3 or 4.

## Patentansprüche

1. Drahtloses Kommunikationsverfahren, wobei das Verfahren von einem Benutzergerät durchgeführt wird und Folgendes umfasst:
Empfangen (601) einer Funkressourcensteuerungs(RRC)-Resume-Nachricht;
Ermitteln (602) von Planungsanforderungskonfigurationsinformationen als Reaktion auf die RRC-Resume-Nachricht, wobei die Planungsanforderungskonfigurationsinformationen verwendet werden, um eine gemeinsam genutzte Uplink-Kanalressource zu erlangen; und
Senden (603) eines Funkverbindungssteuerungsstatusberichts unter Verwendung der gemeinsam genutzten Uplink-Kanalressource, wobei der Funkverbindungssteuerungsstatusbericht verwendet wird, um eine positive Bestätigung einer Funkverbindungssteuerungsdienstdateneinheit bereitzustellen;
wobei das Ermitteln der Planungsanforderungskonfigurationsinformationen als Reaktion auf die RRC-Resume-Nachricht Folgendes umfasst:
Ermitteln der Planungsanforderungskonfigurationsinformationen auf Grundlage der RRC-Resume-Nachricht;
wobei die Planungsanforderungskonfigurationsinformationen eine Planungsanforderungskennung und eine Planungsanforderungsressourcenkennung umfassen.

2. Verfahren nach Anspruch 1, ferner umfassend:
Senden einer RRC-Resume-Abschlussnachricht unter Verwendung der gemeinsam genutzten Uplink-Kanalressource, wobei die RRC-Resume-Abschlussnachricht verwendet wird, um den erfolgreichen Abschluss der Wiederaufnahme der RRC-Verbindung zu bestätigen.

3. Benutzergerät, umfassend:
ein Empfangsmodul (101), ein Verarbeitungsmodul (102) und ein Sendemodul (103), wobei
das Empfangsmodul dazu konfiguriert ist, eine Funkressourcensteuerungs(RRC)-Resume-Nachricht zu empfangen;
das Verarbeitungsmodul dazu konfiguriert ist, als Reaktion auf die RRC-Resume-Nachricht die Planungsanforderungskonfigurationsinformationen zu ermitteln, wobei die Planungsanforderungskonfigurationsinformationen verwendet werden, um eine gemeinsam genutzte Uplink-Kanalressource zu erlangen; und
das Sendemodul dazu konfiguriert ist, einen Funkverbindungssteuerungsstatusbericht unter Verwendung der gemeinsam genutzten Uplink-Kanalressource zu senden, wobei der Funkverbindungssteuerungsstatusbericht verwendet wird, um eine positive Bestätigung einer Funkverbindungssteuerungsdienstdateneinheit bereitzustellen;
wobei das Verarbeitungsmodul dazu konfiguriert ist, als Reaktion auf die RRC-Resume-Nachricht Planungsanforderungskonfigurationsinformationen zu ermitteln,
und insbesondere Folgendes umfasst:
das Verarbeitungsmodul ist dazu konfiguriert, die Planungsanforderungskonfigurationsinformationen auf Grundlage der RRC-Resume-Nachricht zu ermitteln
wobei die Planungsanforderungskonfigurationsinformationen eine Planungsanforderungskennung und eine Planungsanforderungsressourcenkennung umfassen.

4. Benutzergerät nach Anspruch 3, wobei die Sendeeinheit ferner dazu konfiguriert ist, eine RRC-Resume-Abschlussnachricht unter Verwendung der gemeinsam genutzte Uplink-Kanalressource zu senden, wobei die RRC-Resume-Abschlussnachricht verwendet wird, um den erfolgreichen Abschluss der Wiederaufnahme der RRC-Verbindung zu bestätigen.

5. Computerlesbares Speichermedium, wobei das computerlesbare Speichermedium computerausführbare Anweisungen speichert und, wenn die computerausführbaren Anweisungen von einem Benutzergerät aufgerufen werden, das Benutzergerät in die Lage versetzt wird, das Verfahren nach einem der Ansprüche 1 oder 2 durchzuführen.

6. Computerprogrammprodukt, wobei das Computerprogrammprodukt Computeranweisungen umfasst und, wenn das Computerprogrammprodukt auf einem Benutzergerät ausgeführt wird, das Benutzergerät in die Lage versetzt wird, das Verfahren nach einem der Ansprüche 1 oder 2 durchzuführen.

7. Kommunikationssystem, wobei das Kommunikationssystem eine drahtlose Netzwerkvorrichtung und ein Benutzergerät nach einem der Ansprüche 3 oder 4 umfasst.

## Revendications

1. Procédé de communication sans fil, dans lequel le procédé est réalisé par un équipement utilisateur et le procédé comprend :
la réception (601) d'un message de résumé de commande de ressources radio, RRC ;
la détermination (602) d'informations de configuration de demande de planification en réponse au message de résumé RRC, dans lequel les informations de configuration de demande de planification sont utilisées pour obtenir une ressource de canal partagé de liaison montante ; et
l'envoi (603) d'un rapport d'état de commande de liaison radio à l'aide de la ressource de canal partagé de liaison montante, dans lequel le rapport d'état de commande de liaison radio est utilisé pour fournir un accusé de réception positif d'une unité de données de service de commande de liaison radio ;
dans lequel la détermination d'informations de configuration de demande de planification en réponse au message de résumé RRC comprend :
la détermination des informations de configuration de demande de planification sur la base du message de résumé RRC ;
dans lequel les informations de configuration de demande de planification comprennent un identifiant de demande de planification et un identifiant de ressource de demande de planification.

2. Procédé selon la revendication 1, comprenant également :
l'envoi d'un message complet de résumé RRC à l'aide de la ressource de canal partagé de liaison montante, dans lequel le message complet de résumé RRC est utilisé pour confirmer la réussite du résumé de la connexion RRC.

3. Équipement utilisateur, comprenant :
un module de réception (101), un module de traitement (102), et un module d'envoi (103), dans lequel
le module de réception est configuré pour recevoir un message de résumé de commande de ressource radio RRC ;
le module de traitement est configuré pour déterminer des informations de configuration de demande de planification en réponse au message de résumé RRC, dans lequel les informations de configuration de demande de planification sont utilisées pour obtenir une ressource de canal partagé de liaison montante ; et
le module d'envoi est configuré pour envoyer un rapport d'état de commande de liaison radio à l'aide de la ressource de canal partagé de liaison montante, dans lequel le rapport d'état de commande de liaison radio est utilisé pour fournir un accusé de réception positif d'une unité de données de service de commande de liaison radio ;
dans lequel le module de traitement est configuré pour déterminer des informations de configuration de demande de planification en réponse au message de résumé RRC comprend notamment :
le module de traitement est configuré pour déterminer les informations de configuration de demande de planification sur la base du message de résumé RRC
dans lequel les informations de configuration de demande de planification comprennent un identifiant de demande de planification et un identifiant de ressource de demande de planification.

4. Équipement utilisateur selon la revendication 3, dans lequel l'unité d'envoi est également configurée pour envoyer un message complet de résumé de connexion RRC à l'aide de la ressource de canal partagé de liaison montante, dans lequel le message complet de résumé de connexion RRC est utilisé pour confirmer la réussite du résumé de la connexion RRC.

5. Support de stockage lisible par ordinateur, dans lequel le support de stockage lisible par ordinateur stocke des instructions exécutables par ordinateur, et lorsque les instructions exécutables par ordinateur sont invoquées par un équipement utilisateur, l'équipement utilisateur est activé pour réaliser le procédé selon l'une quelconque des revendications 1 ou 2.

6. Produit de programme informatique, dans lequel le produit de programme informatique comprend des instructions informatiques, et lorsque le produit de programme informatique est exécuté sur équipement utilisateur, l'équipement utilisateur est activé pour réaliser le procédé selon l'une quelconque des revendications 1 ou 2.

7. Système de communication, dans lequel le système de communication comprend un dispositif de réseau sans fil et un équipement utilisateur selon l'une quelconque des revendications 3 ou 4.
